# FASCICULE DE BREVET EUROPEEN

(11) **EP 2 185 046 B1**
(45) Date de publication et mention de la délivrance du brevet: **17.04.2013**
(21) Numéro de dépôt: 08803750.2
(22) Date de dépôt: 05.09.2008
(51) Int. Cl.: A47J 31/54, F24H 1/00, H05B 1/00, H05B 3/00

(54) **CHAUDIERE POUR MACHINE DE PREPARATION DE BOISSONS CHAUDES**
HEISSWASSERBEREITER FÜR EINE GETRÄNKEZUBEREITUNGSMASCHINE
BOILER FOR MACHINE FOR THE PREPARATION OF HOT DRINKS

(30) Priorité: 07.09.2007 FR 0757415; 27.06.2008 FR 0854346
(43) Date de publication de la demande: 19.05.2010
(73) Titulaire: COMPAGNIE MEDITERRANEENNE DES CAFES S.A., 06510 Carros (FR)
(72) Inventeur: BLANC, Jean-Pierre, F-06000 Nice (FR); GOERING, Alain, F-06000 Nice (FR)
(74) Mandataire: Hautier, Nicolas
(86) Numéro de dépôt international: PCT/EP2008/061781
(87) Numéro de publication internationale: WO 2009/030753

(56) Documents cités:
- EP-A- 0 345 528
- DE-A1- 10 322 034

## Description

La présente invention concerne une chaudière pour machine de préparation de boissons chaudes. Elle s'appliquera notamment aux chaudières pour machines à café.

Les chaudières connues comportent un corps relié à un réservoir de liquide. Un diffuseur enveloppe le corps et recouvre une face du corps pour définir un volume de circulation de fluide. Par ailleurs, le diffuseur présente une résistance chauffante sur sa face opposée à celle en regard du corps principal.

Ce type de chaudière s'est avéré globalement satisfaisant. Cependant, il serait avantageux d'améliorer les performances des chaudières connues et en particulier d'améliorer leur rendement thermique. A cet effet, on prévoit selon l'invention une chaudière pour machine de préparation de boissons chaudes comportant des moyens de chauffage comportant un diffuseur qui comprend une première paroi destinée à être placée au contact d'un liquide à chauffer et une deuxième paroi opposée à la première paroi. Les moyens de chauffage comportent au moins une résistance sérigraphiée ou photogravée disposée sur la deuxième paroi du diffuseur ainsi qu'un corps délimitant avec la première paroi du diffuseur un volume de chauffage à l'intérieur duquel le liquide est destiné à être chauffé. De manière caractéristique, la chaudière est agencée de manière à ce que le volume de chauffage se situe de part et d'autre des moyens de chauffage.

Ainsi, la partie la plus chaude de la chaudière se situe au coeur de cette dernière et la partie la plus froide se situe en périphérie de la chaudière. Par conséquent, les différences de température entre l'environnement de la chaudière et les surfaces de la chaudière en contact avec cet environnement sont plus faibles que dans les chaudières connues dans lesquelles la résistance sérigraphiée ou photogravée enveloppe le volume de chauffage.

Les transferts thermiques entre la chaudière et son environnement sont donc réduits. Par conséquent, le rendement thermique de la chaudière selon l'invention est amélioré.

Par ailleurs, la partie la plus chaude de la chaudière n'étant pas disposée en périphérie de la chaudière, les risques de détérioration de l'environnement de la chaudière ou de départs d'incendie sous l'effet d'une température anormalement élevée sont limités.

En outre, les risques qu'un utilisateur se brûle sont réduits par rapport aux chaudières connues. En effet, dans les chaudières connues, il existe un risque important de brûlures lorsqu'un utilisateur touche la chaudière alors que la résistance sérigraphiée ou photogravée est toujours activée ou lorsque la chaudière conserve, sous l'effet de son inertie thermique, une température élevée même après l'inactivation de la résistance sérigraphiée ou photogravée.

De manière facultative, mais néanmoins avantageuse, l'invention peut présenter au moins l'une quelconque des caractéristiques suivantes :
- le corps comprend un matériau isolant thermique présentant une conductivité thermique inférieure à 1 W/m/K.

Par exemple, on peut prévoir que le corps soit en matière plastique. Ainsi, le corps fait office d'isolant thermique pour l'ensemble de la chaudière. Les échanges thermiques avec l'environnement de la chaudière sont donc diminués. Le rendement de la chaudière est amélioré et la vitesse de chauffage est augmentée. Cette structure de chaudière associée à ce type de matériau isolant thermiquement permet de limiter l'inertie thermique de la chaudière.

Ainsi, les montées en température sont très rapides. Par exemple, pour une chaudière de 1800 watts on peut élever la température de 8.5 cm³ d'eau de 20 à 95 °C en moins de 10
- le diffuseur présente une conductivité thermique supérieure ou égale à 10 W/m/K.
- le corps et le diffuseur sont conformés de sorte à ce que leur coopération définisse au moins une chambre de chauffage. Ainsi, le liquide est relativement libre de circuler dans le volume de chauffage.
- le corps et le diffuseur sont conformés de sorte que leur coopération définisse un canal de circulation du fluide. Ainsi, le liquide est guidé lors de son parcours dans la chaudière.

Selon une première variante, la surface du corps coopérant avec le diffuseur pour former le canal est sensiblement lisse et le diffuseur présente au moins une rainure. Selon une seconde variante, la surface du corps coopérant avec le diffuseur pour former le canal comporte au moins une rainure et la surface du diffuseur destinée à être au contact du liquide est sensiblement lisse.

Le volume de chauffage entoure sensiblement la résistance sérigraphiée ou photogravée.

Ainsi, le liquide fait le tour ou tout au moins presque l'ensemble du tour de la résistance sérigraphiée ou photogravée.

Dans un premier mode de réalisation, le diffuseur présente une forme sensiblement cylindrique et le corps fait office de manchon venant se loger sur le diffuseur. A cet effet, le diffuseur présente une section sensiblement circulaire ou présente une section polygonale de préférence carrée.

Dans un second mode de réalisation, les moyens de chauffage comportent au moins deux diffuseurs dont les deuxièmes parois sont tournées mutuellement en regard. Les diffuseurs forment des plaques sensiblement planes. Le dispositif comporte un support destiné à recevoir les diffuseurs et les diffuseurs sont situés de part et d'autre du support. Le support présente une conductivité thermique inférieure ou égale à 1W/m/K,
- le support est réalisé en supportant des températures supérieures à 120 °C et présentant des caractéristiques mécaniques élevées tels que des Polysulfones, (PSU) des Polyamides (Pa), des Polybutylène Téraphtalates (PBT), ou tout autre ayant des renforts par fibre de verre et des qualités alimentaires reconnues.

Ainsi, la chaleur n'est que faiblement transmise du diffuseur au support. Cette caractéristique permet de limiter l'inertie thermique de la chaudière. Elle améliore par conséquent son rendement et permet d'augmenter la vitesse de chauffage du fluide.
- Le support comporte :
   ● au moins une zone centrale destinée à recevoir un diffuseur et,
   ● au moins une zone périphérique disposée en périphérie de cette zone centrale et destinée à recevoir un flasque formant une partie au moins du corps de sorte qu'une paroi interne du flasque soit disposée au regard de la première paroi du diffuseur et définisse avec ce diffuseur une partie au moins du volume de chauffage.

La chaudière comporte au moins un joint d'étanchéité disposé entre la première paroi du diffuseur et le corps de sorte à assurer l'étanchéité du volume de chauffage.

Cette solution permet de se passer de moyens destinés à assurer une étanchéité spécifique entre le diffuseur et le support. Or, c'est au niveau de l'interface entre le diffuseur et le support que se situent les moyens de chauffage dont notamment la résistance sérigraphiée ou photogravée. Cette caractéristique permet ainsi d'assurer une étanchéité efficace sans recourir à des solutions complexes.
- le support et le flasque sont formés d'une pièce monobloc.
- le dispositif comporte des moyens de fixation amovibles agencés pour permettre une solidarisation et une désolidarisation amovibles du corps sur le support.

Ainsi, la chaudière peut être assemblée et désassemblée ce qui facilite son nettoyage ainsi que d'éventuelles réparations. Cette caractéristique permet ainsi de prolonger la durée de vie de la chaudière et de répondre à des exigences d'éco conception.
- les moyens de fixation amovibles comprennent des liaisons vis - écrous,
- les moyens de fixation amovibles comprennent des moyens d'enclipsage du corps sur le support. Ainsi le montage ou le démontage de la chaudière ne nécessite pas d'outillage spécifique. Son entretien ou son recyclage sont alors grandement facilités.
- le support présente une symétrie par rapport à un plan médian.
- la chaudière présente une symétrie par rapport à un plan médian.

Ainsi la chaudière ne présente pas de sens imposé de montage sur une machine à laquelle elle est destinée à être associée.
- le support comporte deux faces, chacune de ces faces étant destinée à recevoir un diffuseur et un flasque.
- la chaudière comprend des moyens de connexion fluidique agencés pour assurer une arrivée du liquide dans la chaudière et une sortie du liquide hors de la chaudière.
- la chaudière comporte des moyens de connexion électriques agencés pour établir une connexion électrique entre la résistance sérigraphiée ou photogravée et une source d'alimentation électrique.

En outre, on prévoit selon l'invention une machine à café comportant une chaudière selon l'une quelconque des revendications 1 à 13.

D'autres caractéristiques, buts et avantages de l'invention apparaîtront à la lecture de la description détaillée qui va suivre, et en regard des dessins annexés donnés à titre d'exemples non limitatifs et sur lesquels :
- la figure 1 est une vue en perspective de l'exemple de chaudière selon l'invention.
- la figure 2 est une vue éclatée d'une partie de la chaudière selon l'exemple illustré en figure 1.
- la figure 3 est une vue éclatée de la chaudière selon l'exemple illustré en figure 1.
- la figure 4 est une vue en perspective de la chaudière illustrée en figure 1 selon une coupe réalisée suivant un plan médian.
- la figure 5 est une vue en perspective de la chaudière illustrée en figure 1 selon une coupe effectuée suivant un plan parallèle au plan médian de la figure 4.
- la figure 6 est une vue en perspective d'un support, d'un diffuseur et d'un flasque selon l'exemple de chaudière illustrée en figure 1.
- la figure 7 est une vue en coupe de la chaudière illustrée en figure 1 selon un plan normal au plan médian de la figure 4.
- la figure 8 est une vue en perspective d'un support et d'un diffuseur d'une chaudière Selon l'exemple de réalisation illustré en figure 1.
- les figures 9, 10 et 11 sont des vues en perspective d'un autre exemple de réalisation de l'invention.
- les figures 12 et 13 sont des vues en perspective d'encore un autre exemple de réalisation de l'invention.
- la figure 14 est un mode de réalisation alternatif à celui illustré en figure 6.
- la figure 15 est un mode de réalisation alternatif à celui illustré en figure 7.

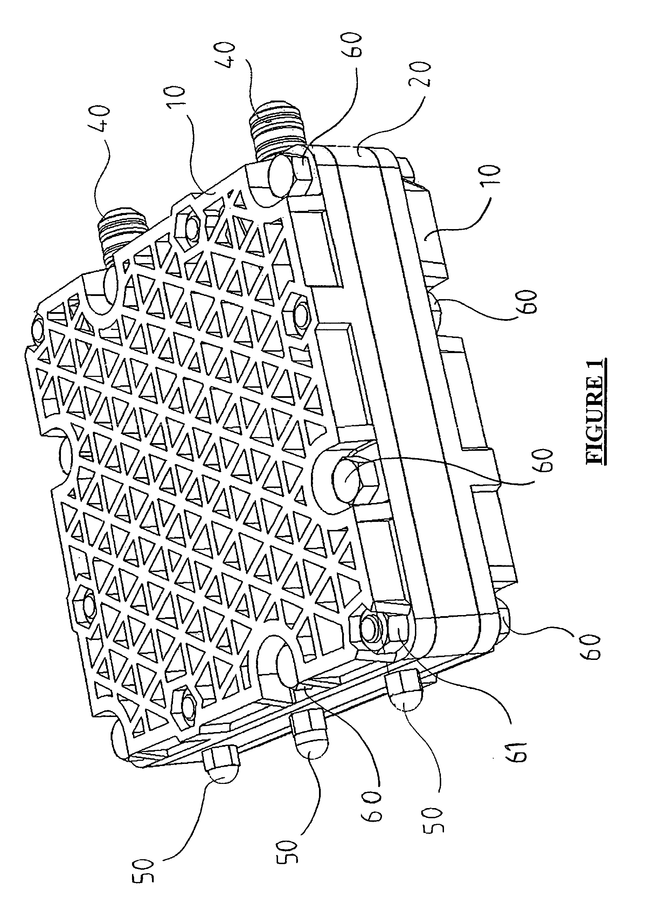

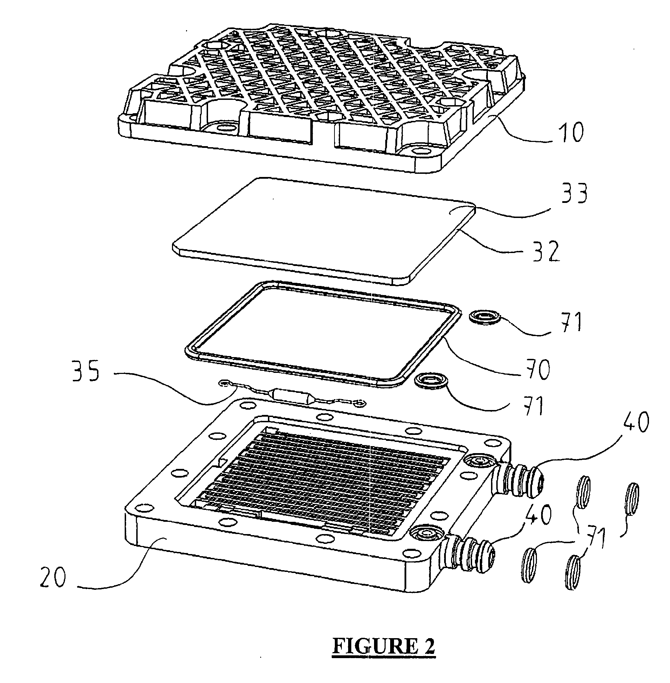

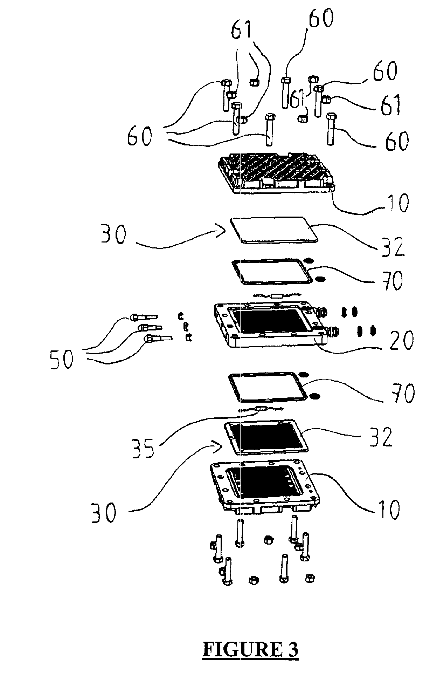

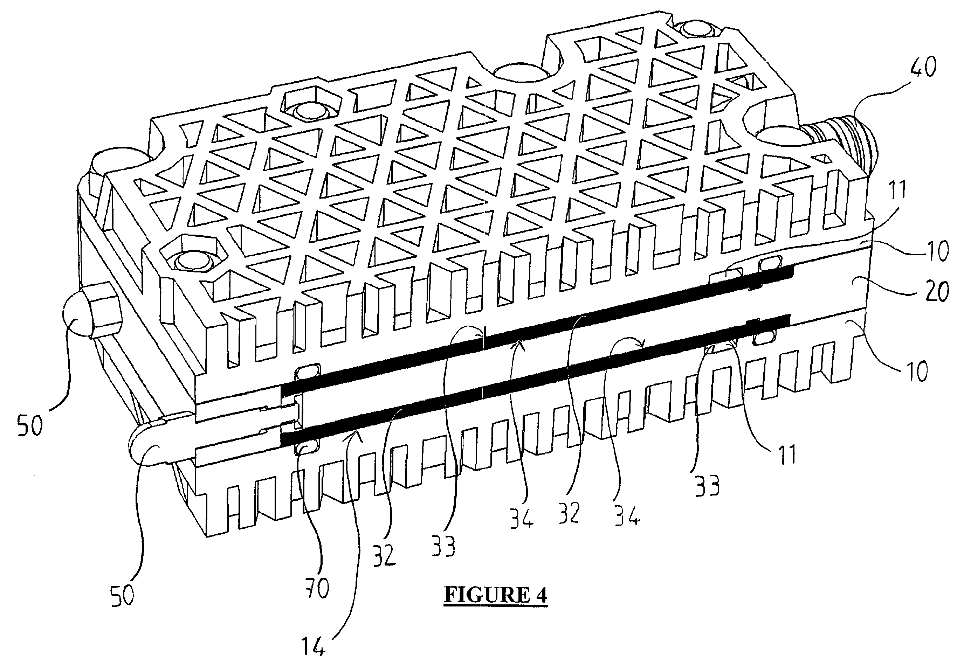

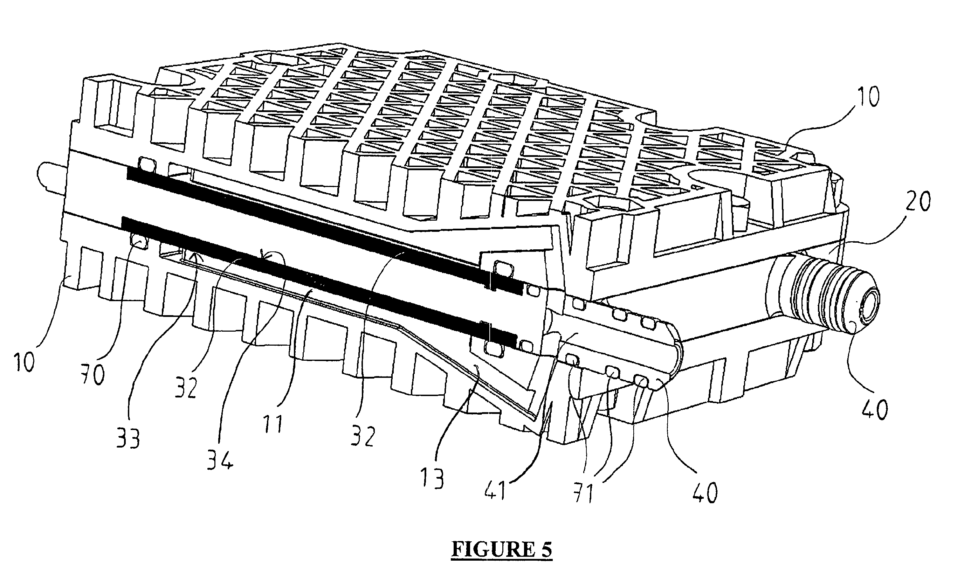

Un exemple de réalisation non limitatif d'une chaudière selon l'invention va maintenant être détaillé en référence aux figures 1 à 8.

La chaudière comporte un corps et des moyens de chauffage 30 formant avec le corps un volume de chauffage 11 à l'intérieur duquel un liquide est destiné à s'écouler et à être chauffé. Plus particulièrement, les moyens de chauffage 30 comportent au moins un diffuseur 32 présentant une première paroi 33 destinée à être disposée au contact du liquide à chauffer. Cette première paroi 33 est destinée à entrer en appui avec une face interne 14 du corps pour définir le volume de chauffage 11.

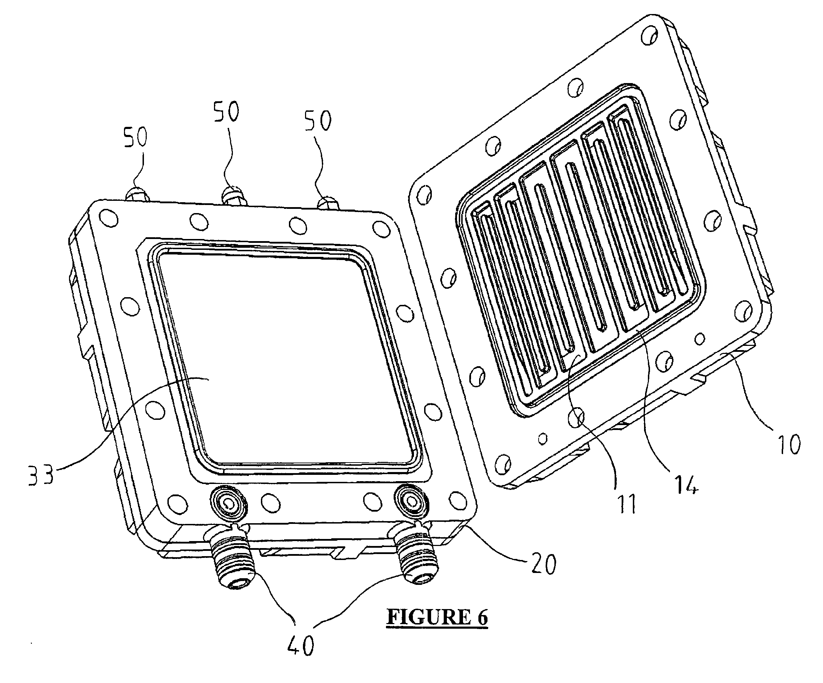

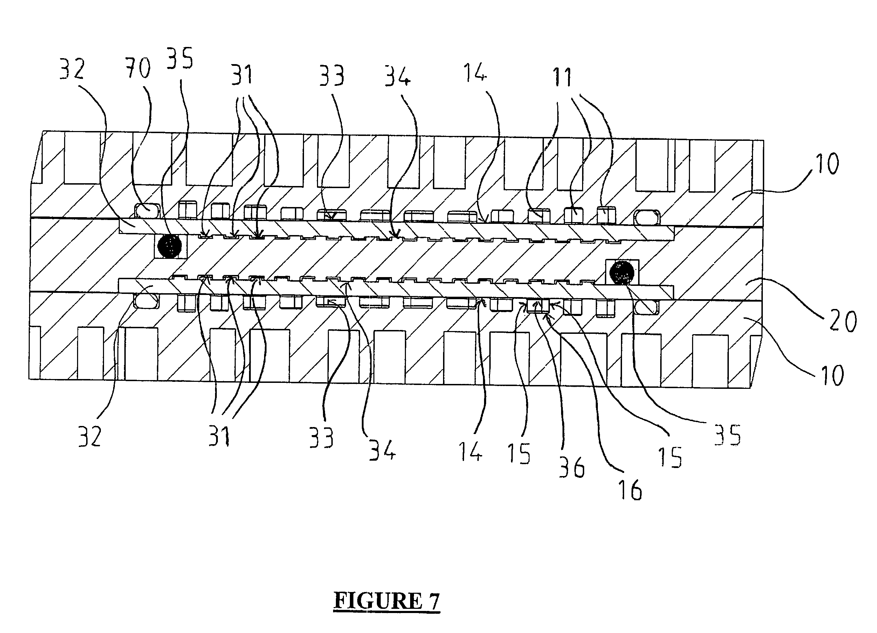

Dans l'exemple représenté, le volume de chauffage 11 définit un canal de circulation en forme de serpentin. Comme illustré sur les figures 6 et 7, ce canal présente deux parois transversales 16, 36 et deux parois latérales 15, 15. Une première paroi transversale 36 est portée par la première paroi 33 du diffuseur et une deuxième paroi transversale 16 est portée par la face interne 14 du corps. Les parois latérales 15, 15 sont portées par le corps et s'étendent en direction du diffuseur 32. Ce mode de réalisation est privilégié lorsque le matériau dans lequel est formé le diffuseur présente une bonne tenue mécanique et/ou une bonne conductivité thermique.

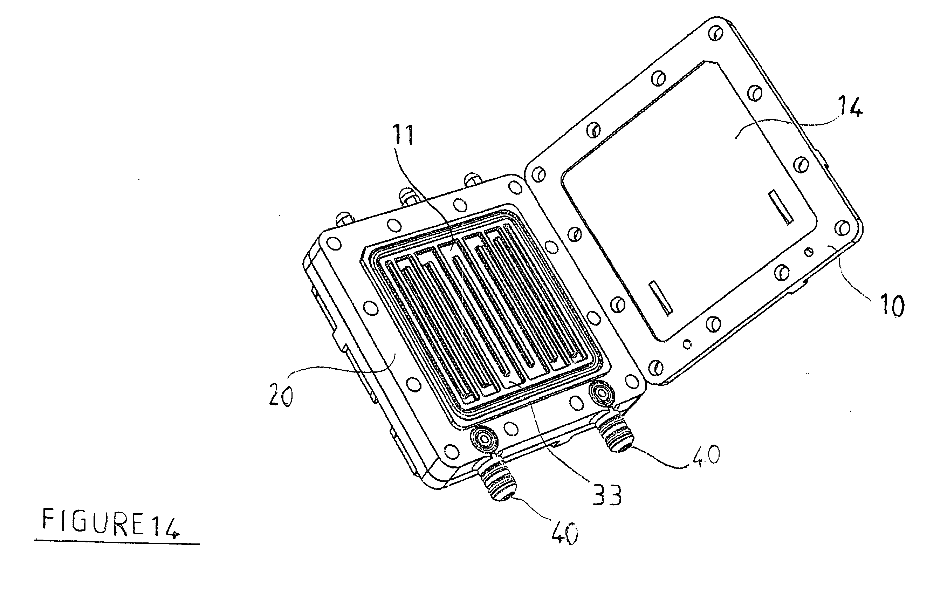

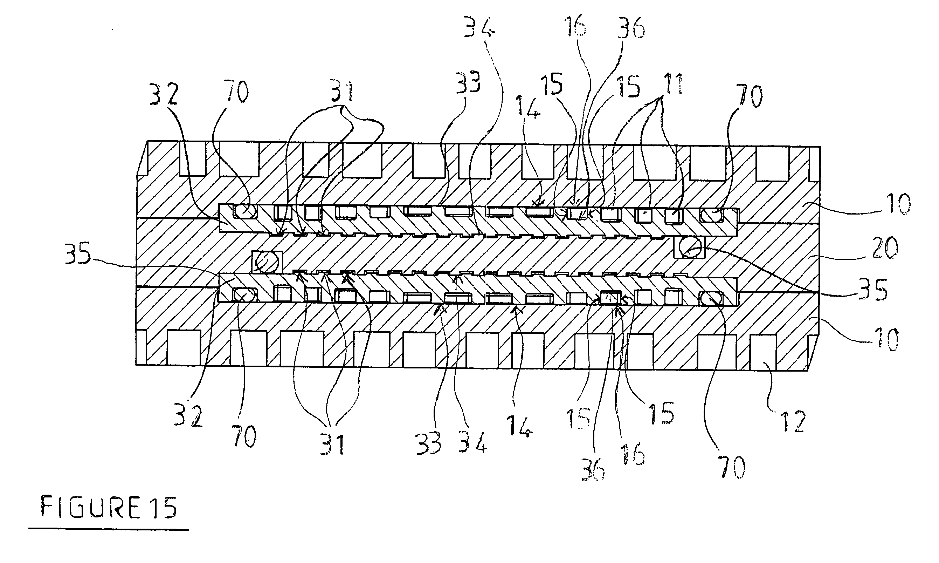

Dans une variante de réalisation, on prévoit que les parois latérales 15, 15 sont portées par le diffuseur 32. Dans cette variante de réalisation, le diffuseur comporte plus de matière que dans la variante précédente. Les parois latérales 15, 15 augmentent la surface de contact entre le diffuseur 32 et le liquide. Les échanges thermiques sont donc favorisés. Par ailleurs, les parois latérales 15, 15 font office de nervures pour le diffuseur 32. Ce dernier présente donc une meilleure tenue à la pression. Ce mode de réalisation est par conséquent privilégié lorsque le matériau dans lequel est formé le diffuseur 32 présente une tenue mécanique relativement faible et/ou une conductivité thermique relativement peu élevée. Avantageusement, le diffuseur 32 est obtenu par matriçage ou moulage. Ce mode de réalisation est illustré en figures 14 et 15.

Les moyens de chauffage 30 comportent au moins un élément résistif disposé sur une deuxième paroi 34 du diffuseur, cette deuxième paroi 34 étant opposée à la première paroi. Cet élément résistif est une résistance sérigraphiée ou photogravée. Elle résulte du dépôt d'une encre résistive. Elle est par exemple de type film épais, habituellement désigné par l'expression "Thick Film" ou encore être de type circuit imprimé réalisé par photogravure. Pour des raisons de clarté, on ne fera référence dans la suite de la description qu'aux références sérigraphiées. Dans chacun des modes de réalisation décrits par la suite, la résistance sérigraphiée pourra être substituées par une résistance photogravée.

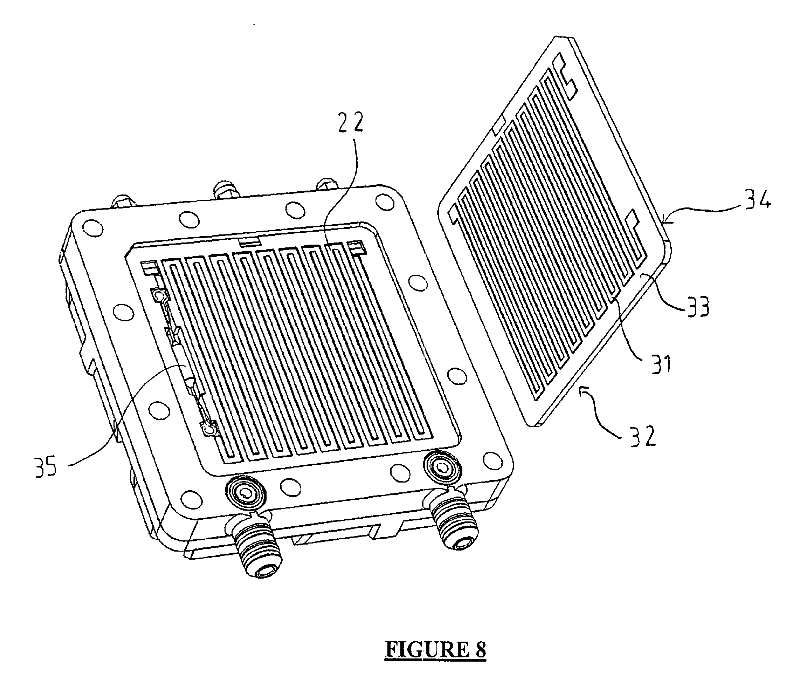

La résistance sérigraphiée 31 comporte au moins une piste formant un motif sur la deuxième paroi 34 comme illustré en figure 8. La résistance comprend une piste sérigraphiée ou pluralité de pistes définissant le motif. Ce motif peut par exemple former un serpentin comme sur l'exemple illustré. Il peut également former une spirale ou un ensemble de cercles concentriques ou juxtaposés ou encore toutes autres formes.

Lorsque la résistance sérigraphiée 31 est alimentée en électricité, elle produit de la chaleur qui se transmet au diffuseur 32 puis au liquide occupant le volume de chauffage 11.

La résistance sérigraphiée 31 peut par exemple présenter une puissance thermique comprise entre 1300 watts et 2500 watts, et plus particulièrement de l'ordre de 1800 watts.

Avantageusement, le diffuseur 32 présente une conductivité thermique supérieure ou égale à 10 W/m/K et plus particulièrement une conductivité thermique comprise entre 10 W/m/K et 400 W/m/K. Ce choix de diffuseur 32 permet de favoriser la transmission de chaleur entre la résistance sérigraphiée 31 et le liquide. On choisit de préférence un diffuseur 32 constitué essentiellement en aluminium, en inox, en céramique, en acier émaillé ou en alliage à base de laiton. Avantageusement la première paroi 33 est revêtue d'un revêtement alimentaire. Le diffuseur a pour fonction de servir de substrat pour recevoir la résistance sérigraphiée 31 et pour assurer une bonne diffusivité thermique entre la résistance sérigraphiée 31 et le liquide.

La chaudière est agencée de sorte que le volume de chauffage 11 se situe de part et d'autre de la résistance sérigraphiée 31. Ainsi, les moyens de chauffage 30 sont situés au coeur de la chaudière et le volume de chauffage 11 est disposé en périphérie des moyens de chauffage 30. Par conséquent, les différences de température entre l'environnement de la chaudière et les surfaces de la chaudière en contact avec cet environnement sont plus faibles que dans les chaudières connues dans lesquelles la résistance sérigraphiée enveloppe le volume de chauffage. Les transferts thermiques entre la chaudière et son environnement sont donc réduits. Quasiment toute l'énergie thermique des moyens de chauffage est transmise au liquide. Par conséquent, le rendement thermique de la chaudière est amélioré.

Le corps est conformé pour assurer un rôle d'isolant thermique afin d'isoler thermiquement la chaudière de son environnement. Il sera de préférence réalisé en matière plastique.

Si comme dans l'exemple de réalisation illustrée sur les figures 1 à 8, le diffuseur 32 présente une forme de plaque, le volume de chauffage 11 est disposé de sorte que la première paroi 33 et la deuxième paroi 34 soient tournées au regard du volume de chauffage 11. On a ainsi une structure de type "sandwich".

Des moyens de chauffage en forme de plaque peuvent être obtenus de manière particulièrement simples et offrent une bonne homogénéité de répartition de la température.

La chaudière comporte préférentiellement un support 20 sur lequel la deuxième paroi 34 prend appui et est protégée du liquide. Le support 20 peut être relié solidairement au corps de manière amovible ou non.

Dans l'exemple illustré sur les figures 1 à 8, la chaudière comporte deux diffuseurs 32, 32 dont chacune des deuxièmes parois 34, 34 sont mutuellement placées en regard. Chacune des ces deuxièmes parois 34, 34 comporte au moins une résistance sérigraphiée 31, 31. Au moins sur leur partie périphérique, chacune de ces deuxièmes parois 34, 34 prend appui sur le support 20. Cet appui participe au maintien et de préférence également à la mise en position du diffuseur 32 sur le support 20. Ainsi la résistance sérigraphiée 31 est recouverte et enserrée par le volume de chauffage 11. Ce dernier est disposé de part et d'autre de l'ensemble formé par les diffuseurs 32, 32. La résistance sérigraphiée 31 est logée à l'intérieur de l'ensemble formé par le support 20 et le corps. Par conséquent, les transferts thermiques entre la chaudière et son environnement sont réduits et le rendement thermique de la chaudière est amélioré.

Dans cet exemple, le support 20 comprend au moins une zone centrale destinée à accueillir au moins un diffuseur 32 et au moins une zone périphérique disposée en périphérie de la zone centrale. Avantageusement la zone centrale présente un évidement 22 dont le pourtour est destiné à assurer le centrage et le maintien en position du diffuseur 32 par simple emboîtement. Cette caractéristique est illustrée en figure 8. La zone périphérique du support 20 est destinée à recevoir quant à elle une partie du corps. Ainsi, la face interne 14 du corps est disposée au contact de la première paroi 33 du diffuseur de sorte à définir avec cette dernière le volume de chauffage. Cette zone périphérique participe ainsi à la solidarisation du corps sur le support 20. De manière avantageuse, elle participe également au centrage du corps par rapport au support 20.

Dans l'exemple illustré sur les figures 1 à 8, le corps se compose de deux flasques 10, 10 destinés chacun à être associé à un diffuseur 32 pour définir le volume de chauffage. Chaque flasque 10 présente une face externe et une face interne 14 dont le pourtour vient en appui sur la zone périphérique du support 20. Avantageusement, chaque flasque 10 est agencé pour faire office d'isolant thermique. Il sera de préférence réalisé en plastique.

La chaudière comporte des moyens de fixation amovibles agencés pour permettre une solidarisation et une désolidarisation amovibles du flasque 10 sur le support 20. Dans l'exemple de réalisation représenté, les moyens de fixation amovibles comportent des liaisons vis 60 - écrous 61.

A cet effet, la face externe de chaque flasque 10 comporte des zones d'appui pour recevoir et laisser libre l'accès à une tête de vis ainsi que des zones d'appui pour recevoir des écrous destinés à être respectivement associés à une vis dont la tête prend appui sur la face externe du flasque 10 opposé.

Avantageusement, les flasques 10, 10 comportent sur leur face externe des évidements de forme sensiblement complémentaire à celle des écrous afin de former des moyens de butée en rotation de sorte à empêcher la rotation des écrous lorsque la vis qui leur est associée est entraînée en rotation.

De manière avantageuse, la surface extérieure des flasques comporte des reliefs formant par exemple des alvéoles 12. Ces reliefs permettent d'augmenter la surface de contact entre l'air environnant la chaudière et cette dernière. Ces reliefs permettent de diminuer la zone de contact entre la chaudière et la main d'un utilisateur. Les risques que ce dernier se brûle sont donc limités.

Les moyens de chauffage 30 comportent au moins un thermostat 35. Ce thermostat 35. a pour fonction de limiter la température du diffuseur 32. Il permet ainsi d'éviter que ce dernier n'atteigne une température destructrice. Il empêche également que les pièces, notamment en plastique, placées à son contact n'atteignent une température destructrice. Chaque thermostat 35 est intégré de manière amovible dans un logement prévu dans le support ou dans les moyens d'appui. Il entre au contact d'un circuit électrique associé à la résistance sérigraphiée 31 par simple emboîtement du diffuseur 32 dans les moyens d'appui ou dans le support 20, on peut prévoir notamment d'utiliser un thermofusible. Avantageusement on prévoit un thermostat pour chaque résistance sérigraphiée. Cette caractéristique est illustrée en figure 8.

A titre d'illustration, une chaudière selon l'exemple précédemment décrit présente les caractéristiques suivantes :
- forme extérieure sensiblement carrée de 100 millimètres de côté environ,
- diffuseur d'environ 58 cm²,
- épaisseur de la chaudière de 33 millimètres environ,
- puissance de 1800 watts environ.
- le support est réalisé essentiellement en plastique supportant des températures supérieures à 120 °C et présentant des caractéristiques mécaniques élevées tels que des Polysulfones, (PSU) des Polyamides (Pa), des Polybutylène Téraphtalates (PBT), ou tout autre ayant des renforts par fibre de verre et des qualités alimentaires reconnues..
- le flasque est réalisé essentiellement en plastique supportant des températures supérieures à 120 °C et présentant des caractéristiques mécaniques élevées tels que des Polysulfones, (PSU) des Polyamides (Pa), des Polybutylène Téraphtalates (PBT), ou tout autre ayant des renforts par fibre de verre et des qualités alimentaires reconnues..

Une telle chaudière peut aisément permettre de porter 8.6 cm3 d'eau de 20°C à 95°C en moins de 10 secondes

Le support comporte des moyens de connexion fluidiques 40, 40 agencés pour assurer une arrivée du liquide dans le volume de chauffage et une sortie du liquide hors du volume de chauffage.

Avantageusement, la connexion fluidique entre la chaudière et un circuit hydraulique de l'appareil de préparation de boissons chaudes s'établit par un branchement des moyens de connexion de la chaudière dans des moyens complémentaires de connexion fluidique liés à l'appareil. Les moyens de connexion fluidique sont agencés de sorte que la solidarisation de la chaudière sur la machine de préparation de boissons entraîne la connexion fluidique des moyens de connexion fluidique avec les moyens complémentaires de connexion fluidique. De préférence, les moyens de connexion fluidique comprennent une portion mâle munie sur sa périphérie de joints toriques 71. Ces portions mâles sont destinées à être emmanchées respectivement dans une portion femelle portée par les moyens complémentaires de connexion fluidique.

La chaudière comporte également des moyens de connexion électriques agencés pour entrer au contact de moyens complémentaires de connexion électrique liés à la machine de préparation de boissons afin d'alimenter en électricité la chaudière. Ces moyens de connexion électrique comprennent trois connecteurs électriques 50, 50, 50. Les moyens de connexion électrique sont agencés de sorte que lorsque la chaudière est solidarisée sur l'appareil de préparation de boissons, les moyens de connexion électriques entrent automatiquement au contact des moyens complémentaires de connexion électrique.

Ainsi, l'assemblage de la chaudière sur l'appareil entraîne automatiquement une connexion fluidique et une connexion électrique de la chaudière avec des circuits d'alimentation en fluide et d'alimentation électrique respectivement.

Par conséquent, l'intégration de la chaudière dans la machine de préparation de boissons est particulièrement simple puisqu'elle nécessite une seule opération de la part de l'utilisateur. L'invention offre ainsi une grande modularité puisque la chaudière peut être démontée et remontée aisément. Par ailleurs, elle garantit des conditions de sécurité élevées puisqu'une fois désolidarisée de l'appareil, la chaudière n'est plus connectée électriquement à une source d'alimentation électrique ce qui supprime tout risque de choc électrique ou d'activation involontaire des résistances sérigraphiées.

Les moyens de connexion fluidique comportent un conduit d'arrivée 41 et un conduit de sortie 41 du liquide. Les conduits sont logés dans le support 20. De préférence, ils sont disposés au niveau d'un plan médian du support 20. Une des extrémités de chacun de ces conduits débouche à l'extérieur de la chaudière et l'autre de ces extrémités débouche dans un conduit intermédiaire 13 logé dans le corps. Une extrémité de chaque conduit intermédiaire 13 débouche quant à elle dans le volume de chauffage 11. De manière avantageuse, la section de chaque conduit intermédiaire 13 augmente entre le conduit d'arrivée 41 et la chambre de chauffage pour compenser la dilatation du fluide due à son élévation de température entre le conduit d'arrivée 41 et la chambre de chauffage 11.

Le support 20 présente une symétrie par rapport à un plan médian. Par ailleurs, l'ensemble de la chaudière présente une symétrie par rapport à ce même plan. Elle admet en outre un deuxième plan de symétrie normal au plan médian.

Cette symétrie permet de limiter le nombre de pièces différentes et donc le nombre de références pour la chaudière. En effet, la chaudière comporte essentiellement un support 20, deux flasques 10, 10 deux diffuseurs 32, 32 associés chacun à une résistance sérigraphiée 31, 31, deux joints périphériques 70, 70 et deux thermostats 35, 35. Cette symétrie permet également de simplifier significativement l'assemblage et le désassemblage de la chaudière. En effet, les pièces suivantes peuvent être indifféremment disposées d'un côté ou de l'autre du support 20 : flasque 10, diffuseur 32, thermostat 35, joint périphérique 70, vis 30 / écrou 61. La complexité du procédé d'assemblage ainsi que les coûts d'obtention sont par conséquent réduits. Par ailleurs, cette symétrie permet de simplifier le montage et le démontage de la chaudière sur le reste de la machine de préparation de boissons. En effet, chacune des portions mâles des moyens de connexion fluidique peut indifféremment être connectée à une arrivée ou une sortie du réseau d'alimentation fluidique de l'appareil. La chaudière n'a ainsi pas de sens préférentiel de montage sur l'appareil. La maintenance et le démantèlement en fin de vie de la chaudière sont ainsi grandement facilités puisque chaque pièce peut être aisément démontée ou interchangée.

Avantageusement, le canal de circulation en forme de serpentin comporte des tronçons linéaires parallèles.

De manière préférée, la chaudière est agencée de sorte qu'en fonctionnement, les tronçons linéaires du canal de circulation s'étendent principalement dans une direction verticale. Ainsi, si l'une parmi l'entrée ou la sortie de la chaudière ou si à la fois l'entrée 40 et la sortie 40 sont déconnectées du reste du circuit hydraulique de la machine, seuls les quelques tronçons connectés directement à ces entrées/sorties se videront. En effet, lorsqu'une entrée 40 ou une sortie 40 du canal est déconnectée du circuit hydraulique de la machine, un volume d'eau contenu dans un tronçon pourrait s'échapper par cette ouverture. Il serait alors remplacé par un volume d'air. Ce volume d'air serait alors stoppé au niveau de la portion du canal formant une liaison entre deux extrémités supérieures de tronçons consécutifs. En effet, la densité de l'air empêche ce volume d'air de descendre le long du tronçon suivant. Cette caractéristique présente pour avantage que même lorsqu'une intervention nécessite d'ouvrir le circuit hydraulique de la machine ou de déconnecter en partie au moins la chaudière de ce circuit, la chaudière ne se vide pas complètement. Cette chaudière peut ainsi être retirée entièrement de la machine sans pour autant provoquer une vidange automatique. Ainsi, dès que la chaudière sera à nouveau connectée sur la machine, les moyens de chauffage 30 seront déjà en contact avec l'eau piégée dans la chaudière. Les risques de surchauffe sont donc réduits. Il n'y a pas besoin d'effectuer un nouveau remplissage de la chaudière avant d'obtenir de l'eau chaude.

La longueur du canal de circulation est définie par la distance que parcourt un volume donné de fluide depuis l'entrée jusqu'à la sortie du canal. La longueur du canal conditionne le temps de parcours du liquide dans la chaudière et donc la chaleur transférée au liquide. Par ailleurs, elle conditionne la surface occupée par le canal et par là même l'encombrement du volume de chauffage 11 et de la chaudière.

Avantageusement, la section du canal de circulation selon un plan sensiblement normal à sa direction d'écoulement le long des tronçons parallèles varie depuis l'entrée du canal de circulation jusqu'au moins la moitié de sa longueur.

Comme illustré en figure 7, la dimensions des parois transversales 16, 36 croît depuis l'entrée jusqu'au moins le milieu de la longueur du canal. La section du canal conserve une surface sensiblement constante pour assurer un débit constant du liquide. Dès lors, la dimension des parois latérales 15, 15 est adaptée en fonction de la variation des dimensions des parois transversales 16, 36.

La paroi transversale 36 formant interface entre le canal de circulation et le diffuseur 32 contribue de manière significative à l'échange thermique entre le diffuseur 32 et le fluide. Ainsi, plus la dimension de cette paroi transversale 36 est grande, plus la quantité de chaleur apportée au fluide est importante.

Or, la quantité de chaleur transférée dépend également des différentiels de température entre la deuxième paroi 34 du diffuseur 32 et le liquide. Plus ce différentiel décroît, plus la quantité de chaleur échangée diminue.

Ainsi, cette configuration particulière du canal permet de favoriser la transmission de chaleur depuis la résistance sérigraphiée 31 au liquide alors que la température de celui-ci monte.

Selon un mode de réalisation non illustré, la dimension des parois transversales croît depuis l'entrée jusqu'à la sortie du canal de circulation.

Dans l'exemple illustré, d'une manière particulièrement avantageuse, la dimension des parois transversales croît depuis l'entrée du canal de circulation jusqu'au milieu de la longueur de ce dernier. Au-delà de la moitié de cette longueur, cette dimension décroît. Le canal présente une parfaite symétrie selon un plan de sorte à ce que quel que soit le sens de montage de la chaudière, le canal de circulation présente la même configuration. Notamment, chacun des conduits 41, 41 d'extrémité du canal de circulation peut indifféremment être positionné sur une entrée ou une sortie du circuit d'alimentation fluidique porté par la machine.

En variante du mode de réalisation précédemment décrit, on prévoit que le support 20 et les flasques 10, 10 forment un ensemble monobloc. On prévoit alors une ouverture dans cet ensemble monobloc pour introduire les moyens de chauffage 30. Selon cette variante, le corps comporte un capot pour fermer de manière étanche l'ouverture.

D'autres modes de réalisation vont maintenant être présentés. Ces modes de réalisation reprennent l'ensemble des caractéristiques de l'exemple de chaudière précédemment décrit et diffère uniquement selon les caractéristiques mentionnées ci-dessous.

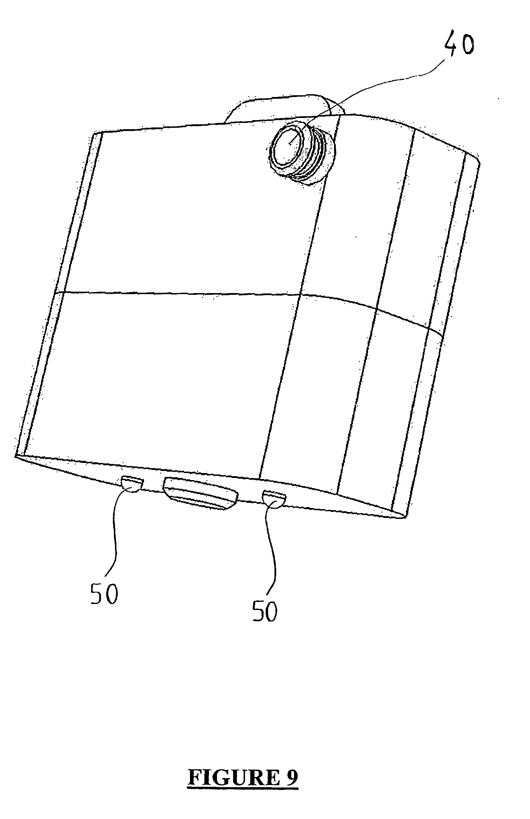

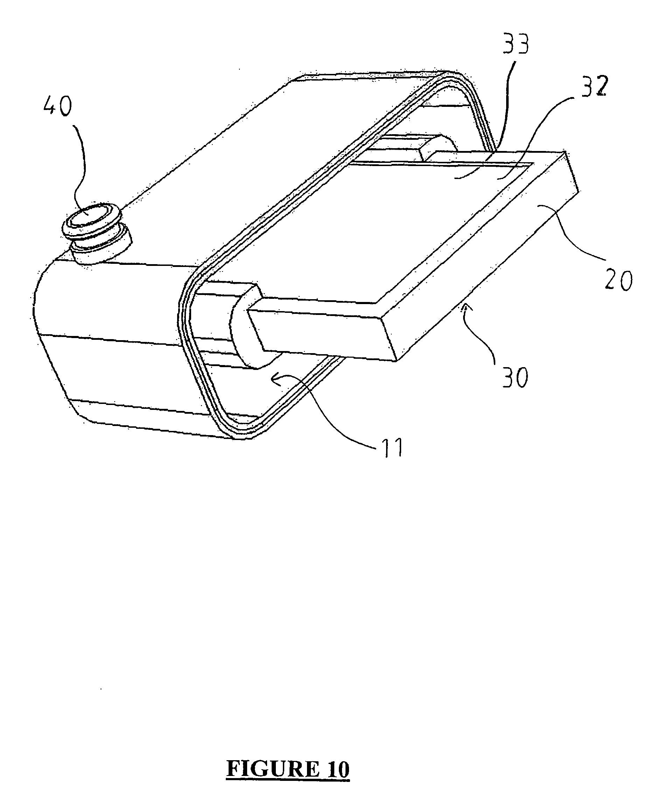

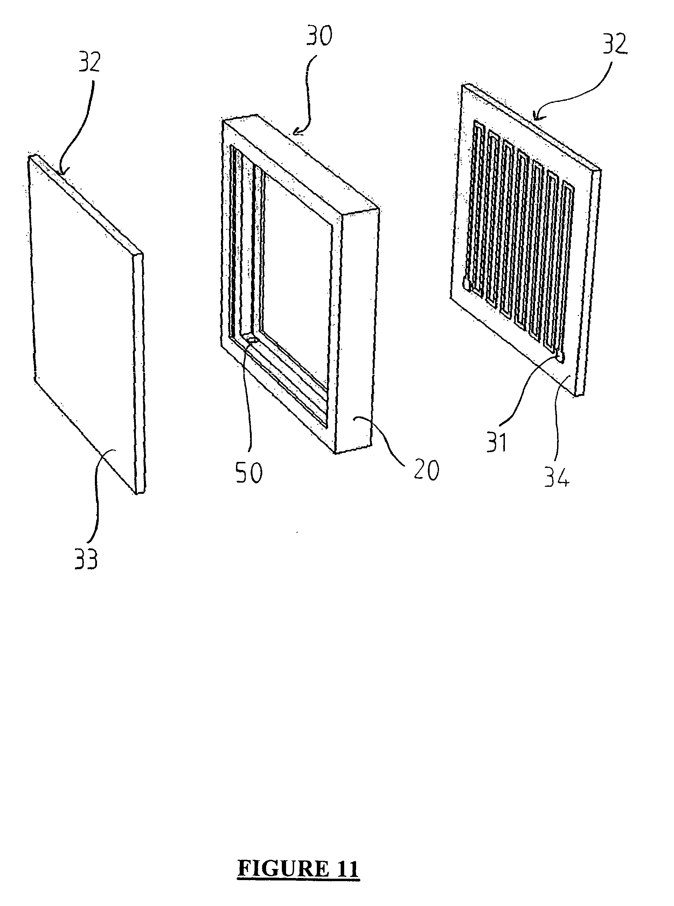

Sur les modes de réalisation représentés sur les figures 9 à 13, le corps forme une enceinte étanche à l'intérieur de laquelle viennent se loger les moyens de chauffage 30. Ces derniers sont ainsi enveloppés par le volume de chauffage 11.

Le support 20 forme un cadre ajouré recevant deux diffuseurs 32, 32. Le corps comprend des moyens de solidarisation aptes à coopérer avec les moyens de chauffage 30 pour permettre une solidarisation amovible de ces derniers dans le corps. A cet effet, on prévoit deux glissières agencées pour assurer le guidage en translation des moyens de chauffage 30 ainsi que la mise en position de ces derniers sur le corps. Ces glissières sont agencées pour ne pas entrer au contact des éléments chauffants mais pour coopérer par exemple avec le support 20.

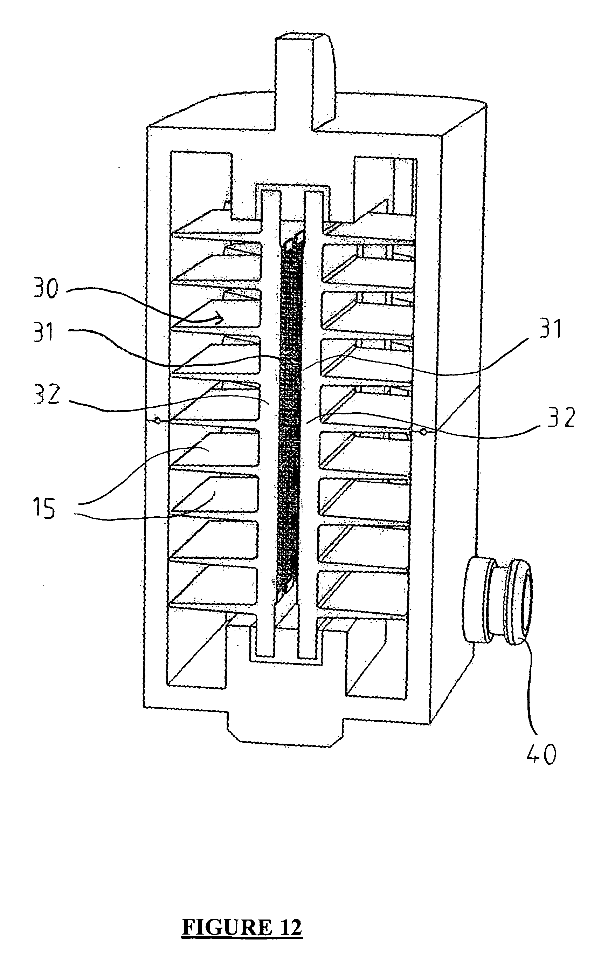

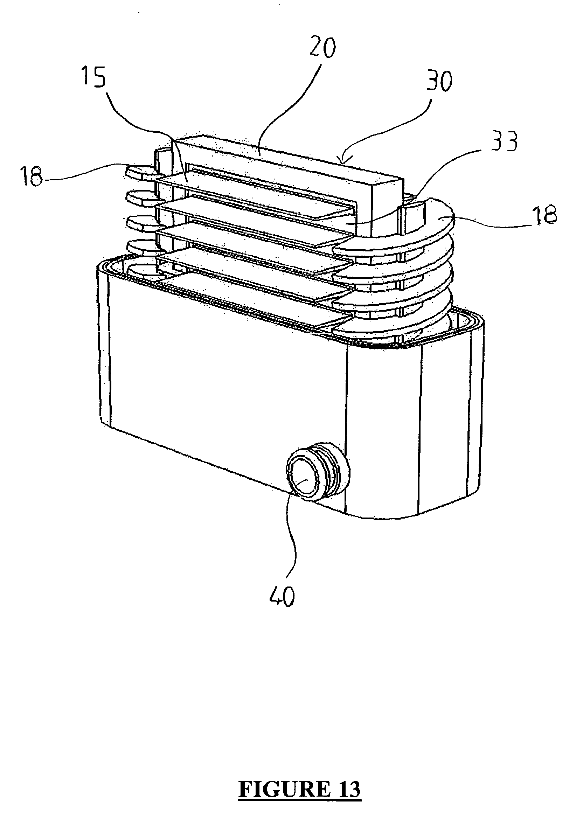

Le mode réalisation illustré sur les figures 12 et 13 constitue une variante du mode de réalisation précédent. Selon ce mode de réalisation, les moyens de chauffage 30 comportent des ailettes destinées à faire office de parois latérales 15 pour canaliser la circulation du liquide. Par ailleurs, elles permettent d'augmenter la surface d'échange entre les éléments chauffants et le liquide. Ces ailettes sont portées par le diffuseur 32 depuis lequel elles s'étendent dans un plan sensiblement normal au diffuseur 32.

Ce mode de réalisation permet d'augmenter très significativement les échanges thermiques entre les moyens de chauffage 30 et le liquide. Le chauffage de ce dernier est donc plus rapide et uniforme.

La figure 13 présente une variante de réalisation de l'exemple représenté en figure 12.

Dans cette variante, la chaudière comporte deux profilés 18, 18. Les profilés 18, 18, les ailettes 15, le diffuseur 32 et le corps sont agencés pour coopérer afin de définir le canal de circulation pour le liquide. Ce canal permet de définir une spirale hélicoïdale d'axe vertical, apte à guider le liquide depuis l'entrée 40 vers la sortie 40 de la chaudière 1. Une telle chaudière, en canalisant vers la sortie le liquide, permet d'optimiser la circulation de ce dernier et tend à augmenter les échanges thermiques.

De manière préférée, on choisit pour le profilé une matière plastique. Le profilé peut être fixé de manière amovible sur le corps, sur les moyens de chauffage 30 ou sur le support 20.

Selon un autre mode de réalisation non illustré, le corps est cylindrique, de section circulaire ou polygonale. Par ailleurs, les moyens de chauffage sont logés à l'intérieur du corps. Ils sont sensiblement cylindriques et présentent une section sensiblement complémentaire de celle du corps. Ainsi, le corps fait office de manchon autour des moyens de chauffage. Le volume de chauffage se situe de part et d'autre des moyens de chauffage et enveloppe la résistance sérigraphiée.

On peut prévoir un seul diffuseur sur lequel sont disposées une ou plusieurs résistances sérigraphiées. On peut également prévoir plusieurs diffuseurs agencés de sorte à former un cylindre.

Dans chacun de ces modes de réalisation les parois latérales du canal peuvent être portées soit par le diffuseur 32 ou soit par le corps.

La chaudière comporte des moyens d'étanchéité comprenant au moins un joint périphérique 70 agencé pour assurer l'étanchéité du volume de chauffage 11. De préférence, le joint 70 est disposé entre la face interne 14 et la première paroi 33 du diffuseur 32. Il est disposé sur l'ensemble de la périphérie du volume de chauffage 11. Ainsi, le liquide reste cantonné entre la face interne 14 du corps et la première paroi 33 du diffuseur 32. Il ne peut alors pas atteindre la deuxième paroi 34 du diffuseur 32 et venir en contact avec la résistance sérigraphiée 31 ou avec des moyens de connexion électrique assurant la conduction électrique entre la résistance sérigraphiée 31 et une source d'alimentation électrique. Cet agencement des moyens d'étanchéité offre une étanchéité particulièrement efficace sûre et simple à mettre en oeuvre. Elle facilite notamment le montage des moyens de connexion électriques.

Avantageusement, pour un diffuseur 32 en forme de plaque, le joint périphérique 70 prend la forme d'un rectangle ou d'un cercle entourant le motif formé par la résistance sérigraphiée 31.

Pour un diffuseur en forme de cylindre, les moyens d'étanchéité comprennent deux joints de section sensiblement identique à celle du diffuseur et disposés, le long de l'axe du cylindre, de part et d'autre de la résistance sérigraphiée.

Pour chacun des modes de réalisation évoqués à titre d'exemple, les parois latérales 15 définissant le canal de circulation peuvent être soit portées par le diffuseur 32 soit portées par le corps.

Avantageusement, pour chacun de ces modes de réalisation, le corps entoure les moyens de chauffage et constitue une protection efficace contre l'endommagement de ces derniers et contre les risques de brûlures.

Une chaudière selon l'invention utilise une faible quantité de métal. Cette quantité de métal correspond essentiellement au diffuseur et aux connecteurs. L'invention permet ainsi de limiter le poids de la chaudière et diminue les coûts de matière et de transport induits par l'utilisation de métal. Or le coût du transport est particulièrement important dans un contexte d'éco conception puisque la chaudière est destinée à être séparée du reste de l'appareil pour être envoyée dans un centre de maintenance au cours de sa durée de vie.

Pour chacun de ces modes de réalisation, la chaudière est agencée de manière à ce que son assemblage soit particulièrement simple. Certaines pièces sont assemblées par simple emboîtement (diffuseur et support par exemple). En outre, des moyens d'encliquetage peuvent être prévus afin de se passer de tout outil ou d'opérations de vissage afin d'associer les flasques sur le support.

L'invention n'est pas limitée aux modes de réalisation décrits mais s'étend à tout mode de réalisation conforme aux revendications.

### REFERENCES

- 10.: Flasque
- 11.: Volume de chauffage
- 12.: Alvéole
- 13.: Conduit intermédiaire
- 14.: Face interne
- 15.: Parois latérales
- 16.: Deuxième paroi transversale
- 18.: Profilé
- 20.: Support
- 22.: Evidement
- 30.: Moyens de chauffage
- 31.: Résistance sérigraphiée
- 32.: Diffuseur
- 33.: Première paroi
- 34.: Deuxième paroi
- 35.: Thermostat
- 36.: Première paroi transversale
- 40.: Entrée/sortie du canal de distribution
- 41.: Conduit d'arrivée / de sortie
- 50.: Connecteurs électriques
- 60.: Vis
- 61.: Ecrous
- 70.: Joint périphérique
- 71.: Joint torique

## Revendications

1. Chaudière pour machine de préparation de boissons chaudes comportant :
● des moyens de chauffage (30) comportant :
- un diffuseur (32) comportant une première paroi (33) destinée à être placée au contact d'un liquide à chauffer et une deuxième paroi (34) opposée à la première paroi (33),
- au moins une résistance sérigraphiée (31) ou photogravée disposée sur la deuxième paroi (34) du diffuseur (32),
● un corps délimitant avec la première paroi (33) du diffuseur (32) un volume de chauffage (11) à l'intérieur duquel le liquide est destiné à être chauffé,
**caractérisée en ce qu'**elle est agencée de manière à ce que le volume de chauffage (11) se situe de part et d'autre des moyens de chauffage (30).

2. Chaudière selon la revendication 1 dans laquelle le corps comprend un matériau présentant une conductivité thermique inférieure à 1 W/m/K

3. Chaudière selon l'une quelconque des revendications précédentes dans laquelle le diffuseur (32) présente une conductivité thermique supérieure ou égale à 10 W/m/K.

4. Chaudière selon l'une quelconque des revendications précédentes dans laquelle le corps et le diffuseur (32) sont conformés de sorte à ce que leur coopération définisse au moins une chambre de chauffage.

5. Chaudière selon l'une quelconque des revendications 1 à 3 dans laquelle le corps et le diffuseur (32) sont conformés de sorte que leur coopération définisse un canal de circulation du fluide.

6. Chaudière selon l'une quelconque des revendications précédentes dans laquelle le volume de chauffage (11) entoure sensiblement la résistance sérigraphiée (31) ou photogravée.

7. Chaudière selon la revendication précédente dans laquelle le diffuseur (32) présente une forme sensiblement cylindrique de section circulaire ou polygonale et dans laquelle le corps fait office de manchon venant se loger sur le diffuseur (32).

8. Chaudière selon l'une quelconque des revendications 1 à 6 dans laquelle les moyens de chauffage (30) comportent au moins deux diffuseurs (32, 32) dont les deuxièmes parois (34, 34) sont tournées mutuellement en regard.

9. Chaudière selon la revendication précédente dans laquelle les diffuseurs (32, 32) forment des plaques sensiblement planes.

10. Chaudière selon l'une quelconque des deux revendications précédentes comportant un support (20) destiné à recevoir les diffuseurs (32,32) et dans laquelle les diffuseurs (32, 32) sont situés de part et d'autre du support (20).

11. Chaudière selon la revendication précédente dans laquelle le support (20) est agencé pour recevoir au moins un diffuseur (32), et pour recevoir un flasque (10) formant une partie au moins du corps et de sorte que le flasque (10) recouvre la première paroi (33) du diffuseur (32) et définisse avec le diffuseur (32) une partie au moins du volume de chauffage (11).

12. Chaudière selon l'une quelconque des revendications précédentes comprenant au moins un joint d'étanchéité (70) disposé entre la première paroi (33) du diffuseur (32) et le corps de sorte à assurer l'étanchéité du volume de chauffage (11).

13. Chaudière selon la revendication précédente comportant des moyens de fixation amovibles agencés pour permettre une solidarisation et une désolidarisation amovibles du corps sur le support (20), les moyens de fixation amovibles comprenant des moyens d'enclipsage du corps sur le support (20).

14. Machine à café comportant une chaudière selon l'une quelconque des revendications précédentes.

## Claims

1. Boiler for a machine for preparing hot drinks comprising:
• heating means (30) comprising:
- a diffuser (32) having a first wall (33) intended to be placed in contact with a liquid to be heated and a second wall (34) opposite the first wall (33),
- at least one screen-printed or photo-etched resistance (31) installed on the second wall (34) of the diffuser (32),
• a body defining with the first wall (33) of the diffuser (32) a heating volume (11) within which the liquid is to be heated,
**characterized in that** it is arranged so that the heating volume (11) is located on both sides of the heating means (30).

2. Boiler according to claim 1 wherein the body comprises a material having a thermal conductivity below 1W/m/K.

3. Boiler according to any one of the preceding claims wherein the diffuser (32) has a thermal conductivity that is greater than or equal to 10W/m/K.

4. Boiler according to any one of the preceding claims wherein the body and the diffuser (32) are shaped such that they act together to form at least one heating chamber.

5. Boiler according to any one of claims 1 to 3 wherein the body and the diffuser (32) are shaped so that they act together to form a channel in which the fluid flows.

6. Boiler according to any one of the preceding claim wherein the heating volume (11) substantially surrounds the photo-etched or screen-printed resistance (31).

7. Boiler according to the preceding claim wherein the diffuser (32) has a substantially cylindrical shape with circular or polygonal section and wherein the body acts as a sleeve which is received on the diffuser (32).

8. Boiler according to any one of claims 1 to 6 wherein the heating means (30) comprises at least two diffusers (32, 32), the second walls (34, 34) of the two diffusors (32, 32) being oriented one opposite the other.

9. Boiler according to any one of the preceding claim wherein the diffusers (32, 32) form substantially flat plates.

10. Boiler according to any one of the two preceding claims comprising a support (20) intended to receive the diffusers (32, 32) and wherein the diffusers (32, 32) are located on both sides of the support (20).

11. Boiler according to the preceding claim wherein the support (20) is intended to receive at least one diffuser (32), and to receive a flange (10) forming at least one part of the body, and so that the flange (10) covers the first wall (33) of the diffuser (32) and defines with the diffuser (32) at least one part of the heating volume (11).

12. Boiler according to any one of the preceding claims comprising at least one gasket (70) placed between the first wall (33) of the diffuser (32) and the body so as to seal the heating volume (11).

13. Boiler according to the preceding claim comprising removable fastening means arranged to permit removable coupling and removable uncoupling of the body on the support (20), the removable fastening means comprising snap fastening means for latching the body (20) on the body.

14. Coffee machine comprising a boiler according to any of the preceding claims.

## Patentansprüche

1. Heißwasserbereiter für eine Getränkezubereitungsmaschine mit:
• Heizeinrichtungen (30) versehen mit :
- einem Diffusor (32) mit einer ersten Wand (33), die dazu bestimmt ist, in Kontakt mit einer zu erwärmenden Flüssigkeit positioniert zu werden, und einer zweiten Wand (34), die der ersten Wand (33) gegenüber liegt,
- mindestens einem im Siebdruck- oder Heliogravüre-Verfahren hergestellten Widerstand (31), der auf der zweiten Wand (34) des Diffusors (32) aufgebracht ist,
• einem Körper, der zusammen mit der ersten Wand (33) des Diffusors (32) ein beheizbares Volumen (11) begrenzt, das die zum Erwärmen bestimmte Flüssigkeit enthält, **gekennzeichnet dadurch, dass** er so gestaltet ist, dass sich das beheizbare Volumen (11) auf beiden Seiten der Heizeinrichtung (30) befindet.

2. Heißwasserbereiter gemäß Patentanspruch 1, dessen Körper aus einem Werkstoff mit einer Wärmeleitung unter 1 W/m/K besteht.

3. Heißwasserbereiter gemäß einem der vorstehenden Patentansprüche, dessen Diffusor (32) eine Wärmeleitfähigkeit von gleich oder größer 10 W/m/K hat.

4. Heißwasserbereiter gemäß einem der vorstehenden Patentansprüche, dessen Körper und Diffusor (32) derart gestaltet sind, dass durch ihr Zusammenwirken mindestens eine Heizkammer gebildet wird.

5. Heißwasserbereiter gemäß einem der Patentansprüche 1 bis 3, dessen Körper und Diffusor (32) derart gestaltet sind, dass durch ihr Zusammenwirken ein Flüssigkeits-Durchflusskanal gebildet wird.

6. Heißwasserbereiter gemäß einem der vorstehenden Patentansprüche, dessen beheizbares Volumen (11) den im Siebdruck- oder Heliogravüre-Verfahren hergestellten Widerstand (31) annähernd umschließt.

7. Heißwasserbereiter gemäß einem der vorstehenden Patentansprüche, dessen Diffusor (32) eine annähernd zylindrische Form mit kreisförmigem oder polygonalem Querschnitt besitzt und bei dem der Körper als Griff dient, der in den Diffusor (32) eingelegt wird.

8. Heißwasserbereiter gemäß einem der Patentansprüche 1 bis 6, bei dem die Heizeinrichtungen (30) mindestens zwei Diffusoren (32, 32) besitzen, deren jeweils zweite Wände (34, 34) einander zugewandt sind.

9. Heißwasserbereiter gemäß vorstehendem Patentanspruch, dessen Diffusoren (32, 32) annähernd ebene Platten bilden.

10. Heißwasserbereiter gemäß einem der beiden vorstehenden Patentansprüche, mit einem Träger (20) zur Aufnahme der Diffusoren (32, 32) und dessen Diffusoren (32, 32) auf beiden Seiten des Trägers (20) angeordnet sind.

11. Heißwasserbereiter gemäß vorstehendem Patentanspruch, dessen Träger (20) so angeordnet ist, dass er mindestens einen Diffusor (32) und einen Flansch (10) aufnehmen kann, der zumindest einen Teil des Körpers bildet, so dass der Flansch (10) die erste Wand (33) des Diffusors (32) überdeckt und zusammen mit dem Diffusor (32) mindestens einen Teil des beheizbaren Volumens (11) bildet.

12. Heißwasserbereiter gemäß einem der vorstehenden Patentansprüche mit mindestens einer Dichtung (70) zwischen der ersten Wand (33) des Diffusors (32) und dem Körper, so dass die Dichtheit des beheizbaren Volumens (11) gewährleistet ist.

13. Heißwasserbereiter gemäß vorstehendem Patentanspruch mit abnehmbaren Befestigungsmitteln, die so angeordnet sind, dass sie eine lösbare Befestigung und Abnehmbarkeit des Körpers am Träger (20) zulassen, wobei die abnehmbaren Mittel zur Befestigung des Körpers am Träger (20) mit Clips versehen sind.

14. Kaffeemaschine mit einem Heißwasserbereiter gemäß einem der vorstehenden Patentansprüche.
